# FASCICULE DE BREVET EUROPEEN

(11) **EP 1 561 618 B1**
(45) Date de publication et mention de la délivrance du brevet: **15.11.2006**
(21) Numéro de dépôt: 05001785.4
(22) Date de dépôt: 28.01.2005
(51) Int. Cl.: B60H 3/00

(54) **Aérateur, notamment pour véhicule automobile**
Luftauslassvorrichtung, insbesondere eines Kraftfahrzeuges
Air outlet, in particular for a vehicle

(30) Priorité: 06.02.2004 FR 0401159
(43) Date de publication de la demande: 10.08.2005
(73) Titulaire: BOURBON AUTOMOBILE, 39170 Saint Lupicin (FR)
(72) Inventeur: Bourbon, Claude, 39360 Molinges (FR)
(74) Mandataire: Jeannet, Olivier

(56) Documents cités:
- DE-U- 20 212 778
- FR-A- 2 821 022
- FR-A- 2 841 184
- US-A1- 2003 186 643

## Description

La présente invention concerne un aérateur, notamment pour véhicule automobile, du type permettant de parfumer l'air diffusé.

De tels aérateurs "à parfum" sont connus, et l'on pourra se référer aux FR 2821022 ou FR 2841184, au nom de la demanderesse, à titre d'illustrations. DE 20212778 décrit le préambule de la revendication 1

Un aérateur de ce type comprend une cartouche amovible, contenant un ou plusieurs éléments de diffusion de parfum et comprenant une ou plusieurs ouvertures pour permettre cette diffusion, cette cartouche étant placée dans un aérateur sur un trajet d'écoulement de l'air. L'aérateur comprend des moyens de commande permettant d'interrompre ou d'autoriser la diffusion du parfum, et pouvant permettre de régler l'intensité de cette diffusion.

Les aérateurs "à parfum" existants ont pour inconvénients de ne pas toujours être très pratiques d'utilisation en ce qui concerne la mise en place ou le retrait de la cartouche, de ne pas être toujours très performants en ce qui concerne le réglage de l'intensité du parfum diffusé ou en ce qui concerne l'étanchéité de l'aérateur en position de non diffusion de parfum. De plus, les aérateurs existants ont dans certains cas des structures relativement complexes ou spécifiques, qui ne permettent pas de réaliser, à partir de mêmes pièces constitutives de base, soit des aérateurs classiques, c'est-à-dire sans dispositif de diffusion de parfum, soit des aérateurs "à parfum".

La présente invention vise à remédier à l'ensemble de ces inconvénients.

L'aérateur qu'elle concerne comprend, comme cela est connu, au moins un conduit d'écoulement d'air, au moins une buse de diffusion de cet air, une cartouche de diffusion de parfum et des moyens de commande permettant d'interrompre ou d'autoriser la diffusion du parfum.

Selon l'invention, l'aérateur comprend :
- deux conduits parallèles d'écoulement d'air ;
- une paroi percée d'un orifice au travers duquel peut être engagée la cartouche, ledit orifice étant aménagé entre les deux conduits ; et
- un module fixé à cette paroi en regard de cet orifice, délimitant un réceptacle de réception de la cartouche et comportant un capuchon obturateur mobile en coulissement le long de ce réceptacle entre une position de recouvrement dudit réceptacle, correspondant à une position d'interruption de la diffusion du parfum, et une position de non recouvrement dudit réceptacle, correspondant à une position de diffusion du parfum, ledit module étant inséré entre lesdits conduits, avec lesquels il communique par des ouvertures latérales aménagées dans ces conduits.

La cartouche peut ainsi être mise en place dans l'aérateur, ou retirée, par simple insertion ou retrait manuel au travers dudit orifice et dans, ou hors, dudit réceptacle.

Le capuchon obturateur recouvre étroitement le réceptacle et la cartouche, et permet une bonne étanchéité de ce réceptacle en position d'interruption de diffusion du parfum. Dans des positions intermédiaires entre la position d'interruption de diffusion du parfum et la position d'autorisation de cette diffusion, ce capuchon obturateur permet un réglage précis de l'intensité de cette diffusion.

Le module forme en outre un ensemble dont peut être équipé ou non un aérateur selon qu'il s'agit de réaliser un aérateur classique ou un aérateur "à parfum".

Les deux conduits peuvent comprendre des moyens rapides d'assemblage, et ces conduits ainsi que le module peuvent comprendre des zones d'emboîtement réciproques, l'assemblage du module à ces conduits étant réalisé par cet emboîtement puis par la venue en prise desdits moyens rapides d'assemblage.

Le réceptacle est avantageusement équipé de moyens élastiques permettant, dans une position de non compression, de maintenir la cartouche dans une position d'extraction, facilitant la saisie de cette cartouche par l'utilisateur, et autorisant, dans une position de compression, la venue de la cartouche en position d'installation dans l'aérateur, la cartouche et le réceptacle comprenant des moyens d'arrêt libérables pour maintenir la cartouche dans cette position d'installation.

Ces moyens élastiques peuvent notamment être constitués par un ressort placé dans le fond du réceptacle, contre lequel vient porter la cartouche lors de son insertion dans l'aérateur ; les moyens d'arrêt peuvent notamment être constitués par un système à baïonnettes.

L'orifice et le réceptacle peuvent avoir un axe perpendiculaire au plan de la paroi dans laquelle est aménagé l'orifice ; selon une possibilité intéressante, toutefois, cet orifice et ce réceptacle ont des axes non perpendiculaires à ce plan, et la cartouche comprend une paroi d'extrémité inclinée, aménagée de manière à affleurer, en position d'installation de la cartouche dans l'aérateur, avec la face de ladite paroi opposée à celle contre laquelle est placé le module.

Cette inclinaison facilite l'introduction de la cartouche dans l'aérateur. De plus, lorsque l'aérateur comprend des moyens d'arrêt tels que précités commandé par un pivotement de la cartouche par rapport au réceptacle, comme cela est le cas d'un système à baïonnettes, l'extrémité de la cartouche fait notablement saillie au-delà de ladite face de la paroi en position d'extraction, facilitant la préhension de cette cartouche en vue de son retrait.

Le capuchon peut comprendre une lèvre ou chicane d'étanchéité permettant de renforcer l'étanchéité du réceptacle par rapport au conduit d'écoulement d'air en position de non diffusion d'air.

Les moyens de commande du capuchon obturateur peuvent être avantageusement montés sur ledit module, faisant que ce dernier forme un ensemble indépendant complet. Selon une forme de réalisation préférée de l'invention dans ce cas,
- le capuchon obturateur comprend une crémaillère longitudinale faisant saillie de sa paroi latérale ;
- le module comprend une molette munie d'une crémaillère courbe, engrenant, directement ou non, avec la crémaillère du capuchon obturateur, cette molette étant portée par au moins une paroi solidaire du module ;
- l'aérateur comprend une ouverture permettant l'accès à cette molette, notamment aménagée dans ladite paroi comprenant ledit orifice.

L'aérateur peut comprendre un ou plusieurs volets d'ouverture/fermeture du ou des conduits d'écoulement d'air ; avantageusement, dans ce cas, l'aérateur comprend un organe de commande unique pour commander le déplacement du capuchon obturateur et le déplacement de ce ou ces volets.

L'invention sera bien comprise, et d'autres caractéristiques et avantages de celle-ci apparaîtront, en référence au dessin schématique annexé, représentant, à titre d'exemples non limitatifs, deux formes de réalisation possibles de l'aérateur qu'elle concerne.
La figure 1 en est une vue en perspective éclatée, selon la première forme de réalisation ;
la figure 2 en est une vue monté, en coupe longitudinale, dans une position d'un capuchon obturateur qu'il comprend ;
la figure 3 en est une vue en coupe selon la ligne III-III de la figure 2 ;
la figure 4 en est une vue en coupe selon la ligne IV-IV de la figure 3 ;
la figure 5 en est une vue similaire à la figure 2, dans une autre position du capuchon obturateur ;
la figure 6 en est une vue en perspective éclatée, selon la deuxième forme de réalisation ;
la figure 7 en est une vue monté, en coupe longitudinale, dans une position d'un ensemble de commande qu'il comprend ;
la figure 8 en est une vue en coupe selon la ligne VIII-VIII de la figure 7 ;
la figure 9 en est une vue en coupe selon la ligne IX-IX de la figure 8 ;
les figures 10 et 11 en sont des vues similaires à la figure 7, dans deux autres positions de l'ensemble de commande ;

Par simplification, les parties ou éléments d'une forme de réalisation qui se retrouvent de manière identique ou similaire dans une autre forme de réalisation seront identifiés par les mêmes références numériques et ne seront pas à nouveau décrits.

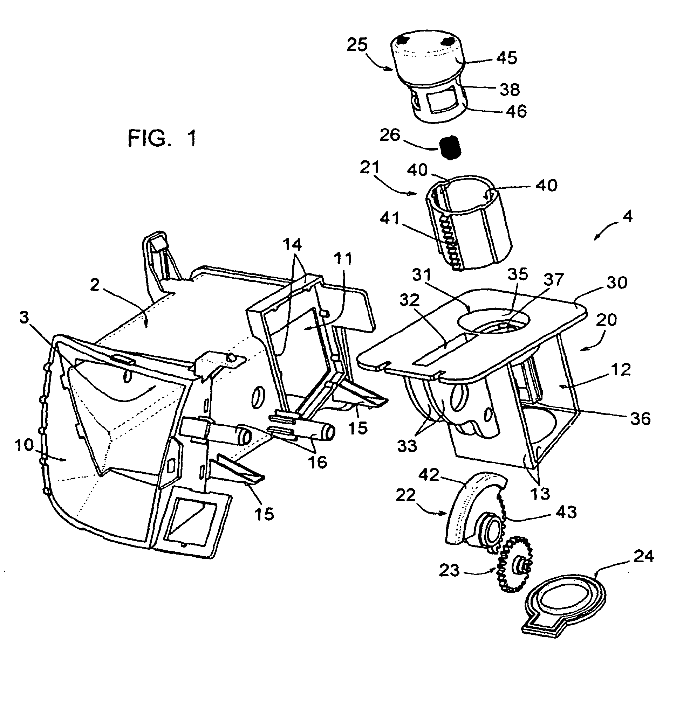

Les figures 1 à 5 représentent un aérateur 1, notamment pour véhicule automobile, du type permettant de parfumer l'air diffusé.

Cet aérateur 1 comprend deux boîtiers 2 disposés de manière parallèle l'un à l'autre (un seul de ces boîtiers 2 est représenté sur la figure 1), délimitant chacun un conduit 3 d'écoulement de l'air, et un module central 4 formant un dispositif de diffusion de parfum.

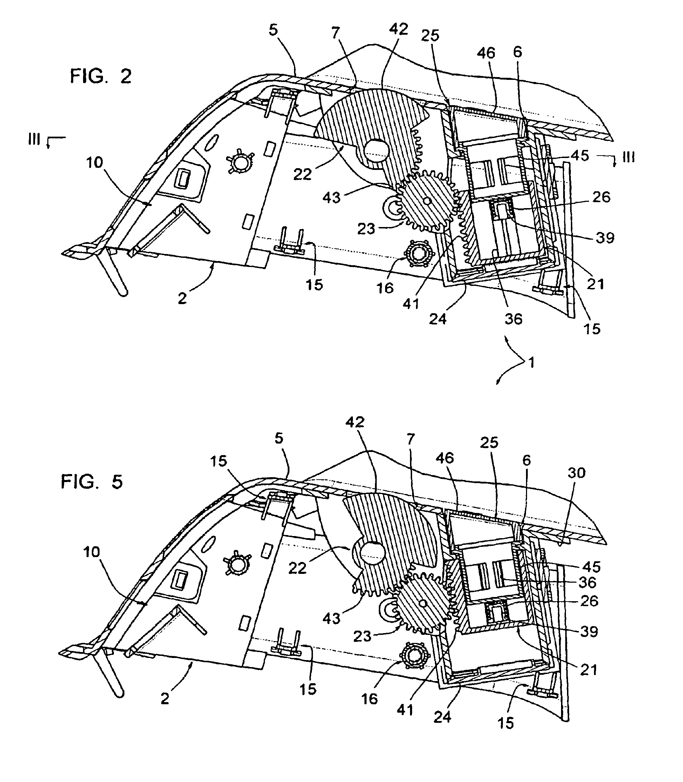

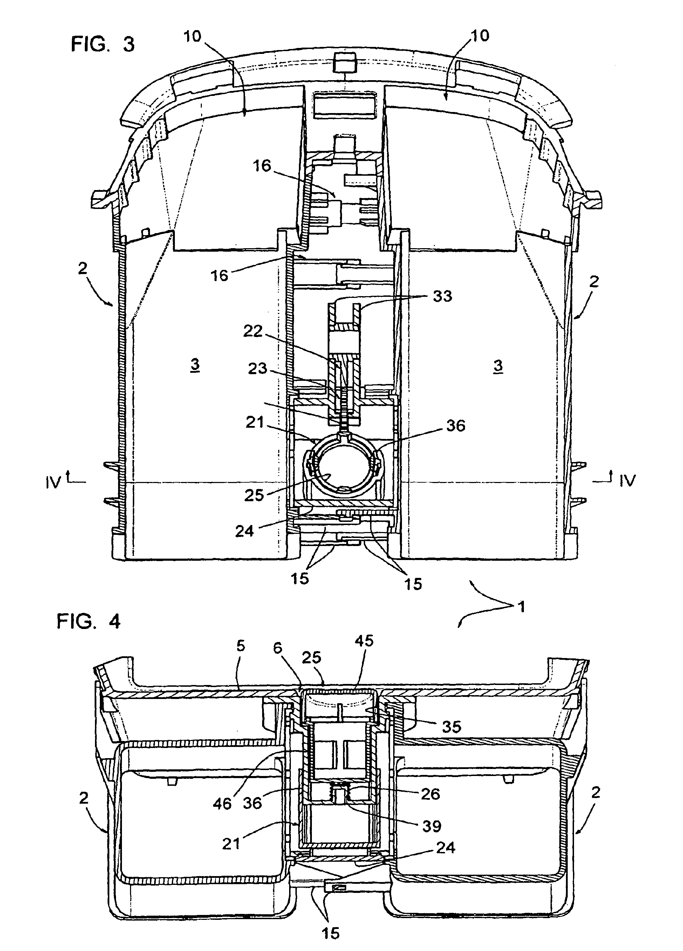

Comme cela apparaît sur les figures 2 et 3, l'aérateur 1 est destiné à être placé en dessous de la paroi 5 d'un tableau de bord d'un véhicule automobile. Cette paroi 5 comprend un orifice 6 et une lumière 7, en regard desquels est placé le module 4.

Chaque boîtier 2 comprend une ouverture arrière destinée à être reliée à un conduit d'acheminement de l'air et une ouverture avant 10 destinée à recevoir une buse de diffusion et d'orientation de cet air.

Chaque boîtier 2 comprend également une fenêtre latérale 11 permettant la mise en communication du conduit 3 qu'il délimite avec un conduit 12 délimité par des parois 13 du module 4. Des parois 14 bordent cette fenêtre 11 et délimitent ainsi un logement d'emboîtement desdites parois 13 du module 4 en position de montage.

Chaque boîtier 2 comprend en outre des pattes d'encliquetage 15 pour son assemblage à l'autre boîtier 2 ainsi que des plots 16 de positionnement d'un boîtier 2 par rapport à l'autre.

Le module 4 comprend un boîtier 20, un capuchon obturateur 21, une molette 22 et un pignon 23 de commande du mouvement du capuchon obturateur 21, un bouchon inférieur 24, une cartouche 25 contenant des éléments de diffusion de parfum et un ressort 26.

Le boîtier 20 comprend, outre les parois 13, une paroi supérieure 30 destinée à venir contre la paroi 5, pourvue d'un orifice 31 et d'une lumière 32 venant en coïncidence de ceux de cette paroi 5 en position de montage. Ce boîtier 20 comprend également deux parois parallèles 33 reliant la paroi 30 et l'une des parois 13, percée de trous pour le montage pivotant sur elle de la molette 22 et du pignon 23. L'espace délimité par ces deux parois 33 entre elles communique avec le conduit 12 par une ouverture.

En dessous de la paroi 30, et en direction de l'intérieur du conduit 12, le boîtier 20 forme une paroi cylindrique 35 puis un berceau 36 en forme de U, formant un réceptacle 37 de réception de la cartouche 25.

Ce réceptacle 37, de même que l'orifice 6, ont des axes non perpendiculaires au plan de la paroi 5.

La paroi 35 et le berceau 36 forment entre eux des épaulements, contre lesquels peut être reçu un épaulement 38 que comprend la cartouche 25.

La paroi 35 comprend des gorges en arc de cercle (cf. figure 2) pouvant recevoir des ergots correspondants que comprend la cartouche 25, l'ensemble formant un système à baïonnettes.

Les branches latérales du berceau 36 sont rectilignes et forment des guides du coulissement du capuchon obturateur 21 le long du berceau 36, et la branche inférieure de ce berceau 36 comprend un plot central 39 sur lequel est engagé le ressort 26.

Le capuchon 21 comprend un fond et une paroi latérale. Cette paroi latérale forme deux glissières 40 diamétralement opposées, permettant l'engagement du capuchon 21 à coulissement sur les branches latérales du berceau 36, et comporte une crémaillère longitudinale 41 en saillie.

La molette 22 comprend une partie arrondie 42 de manoeuvre et une crémaillère courbe 43 venant, en position de montage de cette molette et du pignon 23 sur les parois 33, en prise avec ce pignon 23. Ce pignon 23 peut quant à lui venir en prise avec la crémaillère 41 du capuchon 21.

Le bouchon 24 sert à fermer l'ouverture inférieure du boîtier 20 qui permet l'engagement du capuchon 21 sur le berceau 36.

La cartouche 25 comprend un corps 45 et un capuchon 46.

Le corps 45 délimite une cavité dans laquelle sont placés un ou plusieurs éléments imprégnés de parfum, et comprend des ouvertures permettant la diffusion de ce parfum. Ce corps 45 forme un épaulement propre à venir en appui contre l'épaulement et comporte le ou les ergots destinés à coopérer avec la ou les gorges du boîtier 20.

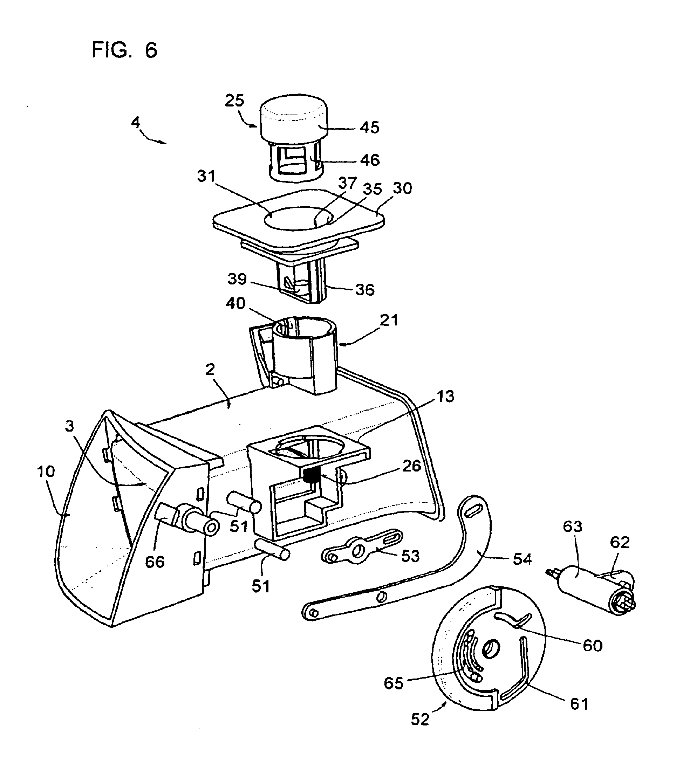

Le capuchon 46 ferme la cavité du corps 45. Il présente une paroi supérieure inclinée qui, en position d'insertion de la cartouche 25 dans le réceptacle 37 montrée sur les figures 2 et 5, affleure avec la paroi 5.

Le ressort 26 est engagé sur le plot 39 et reçoit le fond de la cartouche 25 lorsque celle-ci est engagée dans le réceptacle 37.

Comme cela se comprend en référence aux figures, les deux boîtiers 2 sont destinés à être assemblés l'un à l'autre au moyen des pattes 15 et des plots 16, les parois 13 du boîtier 20 venant s'emboîter dans les cadres délimités par les parois 14 des boîtiers 2.

L'aérateur 1 ainsi constitué est mis en place sous la paroi 5, l'orifice 31 et la lumière 32 du boîtier 20 venant coïncider avec l'orifice 6 et la lumière 7 de cette paroi 5, et la molette 22 étant engagée au travers de cette lumière 7.

La mise en place de la cartouche 25 est réalisée en insérant cette cartouche 25 au travers de l'orifice 6 puis dans le réceptacle 37, en comprimant le ressort 26 pour amener les ergots de la cartouche 25 en regard des gorges de la paroi 35 puis en faisant pivoter la cartouche 25 pour faire pénétrer ces ergots dans ces gorges.

L'actionnement de la molette 22 permet d'amener le capuchon 21 soit dans une position inférieure de non recouvrement du corps 45 (cf. figure 2), permettant la diffusion du parfum, soit dans une position de recouvrement complète de ce corps 45 (cf. figure 5), interdisant la diffusion du parfum, soit dans une pluralités de positions intermédiaires permettant de régler l'intensité de la diffusion de ce parfum.

Le retrait de la cartouche 25 est réalisé en faisant pivoter cette cartouche jusqu'à dégager les ergots des gorges correspondantes ; le ressort 26 permet alors d'amener la cartouche 25 dans une position d'extraction qui facilite la préhension de cette cartouche, et l'inclinaison de la paroi d'extrémité du capuchon 46 permet de favoriser cette préhension.

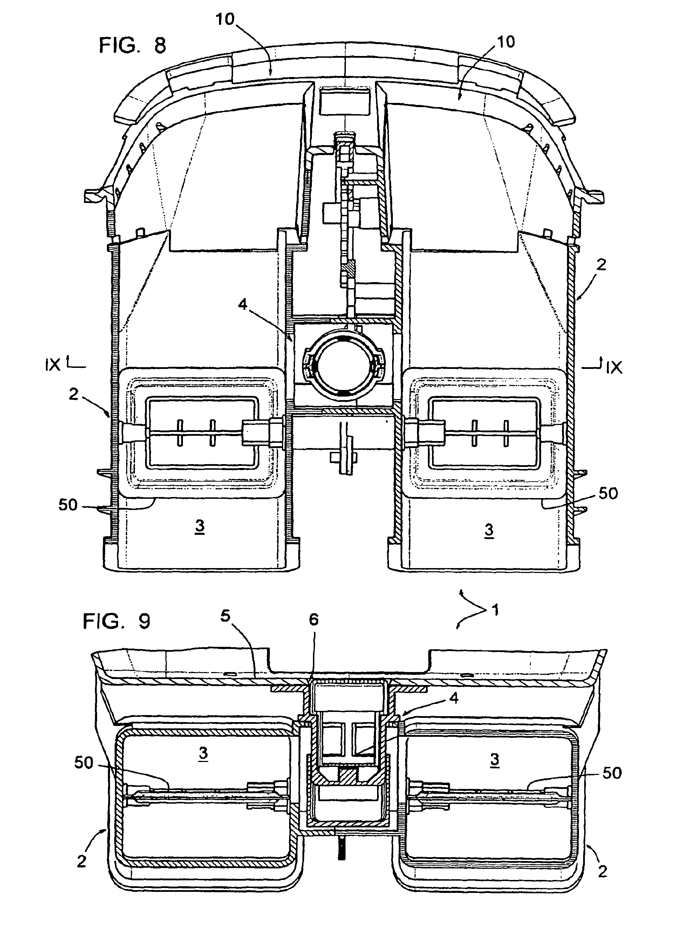

Les figures 6 à 11 représentent un aérateur 1 dont les boîtiers 2 sont équipés de volets pivotants 50 d'ouverture/fermeture des conduits 3 et dont les moyens de commande du mouvement du capuchon 21 ne sont pas montés sur le module 4 mais entre les boîtiers 2.

Ainsi que cela est représenté, l'un des deux boîtiers 2 comprend des pivots 51 sur lesquels sont montés respectivement une molette d'actionnement 52, une biellette 53 d'actionnement du capuchon 21 et une biellette 54 d'actionnement des volets 50.

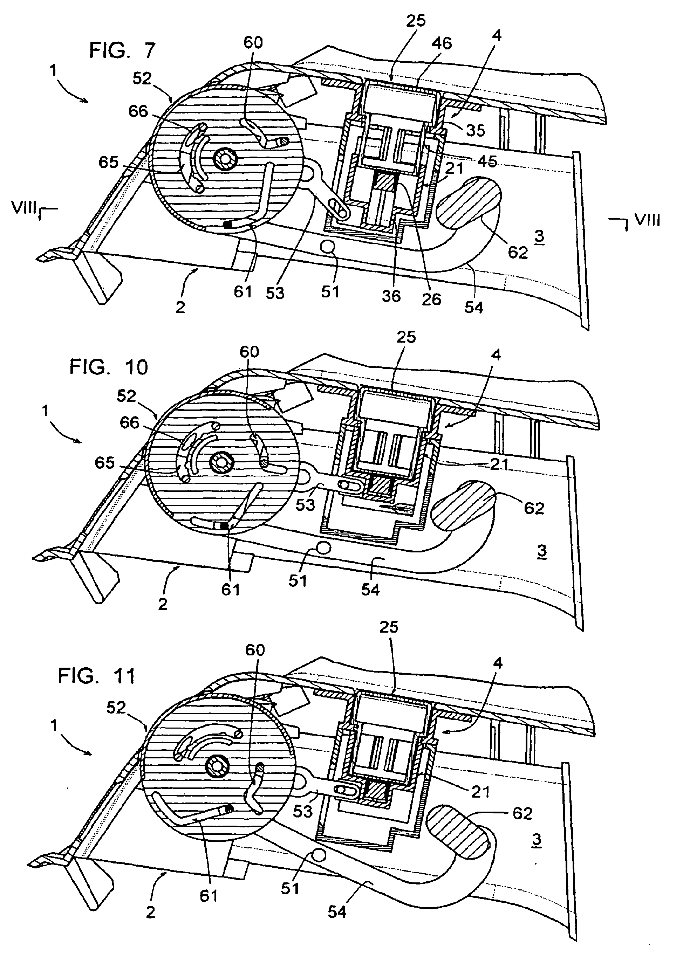

En référence aux figures 7, 10 et 11, il apparaît que la mollette 52 comprend deux gorges 60, 61 dans lesquelles se déplacent, lors du pivotement de cette mollette, des ergots solidaires de chacune des biellettes 53 et 54. La gorge 60 recevant l'ergot de la biellette 53 comprend une première partie sensiblement radiale et une deuxième partie en arc de cercle centré sur l'axe du pivotement de la mollette 52. La gorge 61 recevant l'ergot de la biellette 54 comprend une première partie en arc de cercle centré sur l'axe du pivotement de la mollette 52 et une deuxième partie oblique.

Du côté opposé auxdits ergots, la biellette 53 comprend une lumière dans laquelle est engagé un ergot solidaire du capuchon 21 et la biellette 54 comprend une lumière dans laquelle est engagé un ergot solidaire d'une biellette 62 solidaire d'un axe 63 sur lequel sont montés chacun des deux volets 50.

La molette 52 comprend en outre une lumière en arc de cercle 65 engagée sur un plot 66 du boîtier, ce plot 66 formant une butée limitative du pivotement de cette molette 52. La molette 52 comporte deux tampons amortissants aux extrémités de la lumière 65.

Dans la position montrée sur la figure 7, le capuchon 21 est en position de diffusion de parfum et les volets 50 sont en position d'ouverture. De l'air parfumé est ainsi diffusé par l'aérateur.

Dans la position montrée sur la figure 10, les ergots des biellettes 53 et 54 se sont déplacés dans lesdites premières parties des gorges 60, 61, ce qui a provoqué le basculement de la biellette 53, et donc le déplacement du capuchon 21 en position de non diffusion de parfum, sans modification de la position de la biellette 54, donc sans modification de la position des volets 50. L'aérateur 1 diffuse alors de l'air parfumé.

Dans la position montrée sur la figure 11, les ergots des biellettes 53, 54 se sont déplacés dans lesdites deuxièmes parties des gorges 60, 61, ce qui n'a provoqué aucun mouvement de la biellette 53 mais a provoqué le basculement de la biellette 54, réalisant le pivotement des volets 50 vers leur position de fermeture.

Comme cela apparaît de ce qui précède, l'invention fournit un aérateur, notamment pour véhicule automobile, présentant les avantages déterminants d'être pratique d'utilisation en ce qui concerne la mise en place ou le retrait de la cartouche, d'être performant en ce qui concerne le réglage de l'intensité du parfum diffusé ou en ce qui concerne l'étanchéité en position de non diffusion de parfum, et d'avoir une structure permettant de réaliser, à partir de mêmes pièces constitutives de base, soit des aérateurs classiques, c'est-à-dire sans dispositif de diffusion de parfum, soit des aérateurs "à parfum".

Il va de soi que l'invention n'est pas limitée à la forme de réalisation décrite ci-dessus à titre d'exemple mais qu'elle s'étend à toutes les formes de réalisation couvertes par les revendications ci-annexées. Ainsi, le module 4 pourrait être situé non pas entre deux boîtiers 2 mais dans un de ces boîtiers 2 ; l'aérateur peut ne comprendre qu'un seul boîtier 2 ; le module 4 peut communiquer latéralement avec le ou les boîtiers 2, comme représenté, ou pourrait être relié, du côté opposé aux ouvertures frontales 10 de ces boîtiers 2, à une arrivée d'air qui lui serait propre ; la paroi supérieure du ou des boîtiers 2 peut former la paroi 5 précitée.

## Revendications

1. Aérateur, notamment pour véhicule automobile, comprenant au moins un conduit d'écoulement d'air, au moins une buse de diffusion de cet air, une cartouche de diffusion de parfum et des moyens de commande permettant d'interrompre ou d'autoriser la diffusion du parfum, et comprenant:
- deux conduits parallèles d'écoulement d'air ;
- une paroi (5) percée d'un orifice (6) au travers duquel peut être engagée la cartouche, ledit orifice (6) étant aménagé entre les deux conduits ;
**caractérisé en ce que**
- un module fixé à cette paroi (5) en regard de cet orifice (6), délimitant un réceptacle de réception de la cartouche et comportant un capuchon obturateur mobile en coulissement le long de ce réceptacle entre une position de recouvrement dudit réceptacle, correspondant à une position d'interruption de la diffusion du parfum, et une position de non recouvrement dudit réceptacle, correspondant à une position de diffusion du parfum, ledit module étant inséré entre lesdits conduits, avec lesquels il communique par des ouvertures latérales aménagées dans ces conduits.

2. Aérateur selon la revendication 1, **caractérisé en ce que** les deux conduits comprennent des moyens rapides d'assemblage, et **en ce que** ces conduits ainsi que le module comprennent des zones d'emboîtement réciproques.

3. Aérateur selon la revendication, 1 ou la revendication 2, **caractérisé en ce que** le réceptacle est équipé de moyens élastiques (26) permettant, dans une position de non compression, de maintenir la cartouche dans une position d'extraction, facilitant la saisie de cette cartouche par l'utilisateur, et autorisant, dans une position de compression, la venue de la cartouche en position d'installation dans l'aérateur, la cartouche et le réceptacle comprenant des moyens d'arrêt libérables pour maintenir la cartouche dans cette position d'installation.

4. Aérateur selon l'une des revendications 1 à 3, **caractérisé en ce que** l'orifice (6) et le réceptacle ont des axes non perpendiculaires au plan de la paroi dans laquelle est aménagé cet orifice (6), et **en ce que** la cartouche comprend une paroi d'extrémité inclinée, aménagée de manière à affleurer, en position d'installation de la cartouche dans l'aérateur, avec la face de ladite paroi opposée à celle contre laquelle est placé le module.

5. Aérateur selon l'une des revendications 1 à 4, **caractérisé en ce que** le capuchon comprend une lèvre ou chicane d'étanchéité permettant de renforcer l'étanchéité du réceptacle par rapport au conduit d'écoulement d'air en position de non diffusion d'air.

6. Aérateur selon l'une des revendications 1 à 5, **caractérisé en ce que** les moyens de commande du capuchon obturateur sont montés sur ledit module.

7. Aérateur selon la revendication 6, **caractérisé en ce que** :
- le capuchon obturateur comprend une crémaillère longitudinale faisant saillie de sa paroi latérale ;
- le module comprend une molette munie d'une crémaillère courbe, engrenant, directement ou non, avec la crémaillère du capuchon obturateur, cette molette étant portée par au moins une paroi solidaire du module ;
- l'aérateur comprend une ouverture permettant l'accès à cette molette, notamment aménagée dans ladite paroi comprenant ledit orifice.

8. Aérateur selon l'une des revendications 1 à 7, **caractérisé en ce qu**'il comprend un ou plusieurs volets (50) d'ouverture/fermeture du ou des conduits (3) d'écoulement d'air, et un organe de commande unique pour commander le déplacement du capuchon obturateur et le déplacement de ce ou ces volets (50).

## Claims

1. Ventilator, especially for an automobile vehicle, comprising at least one air flow duct, at least one diffusion nozzle for this air, a perfume diffusion cartridge and control means permitting the diffusion of the perfume to be authorised or interrupted, **characterised in that** it comprises:
- two parallel air flow ducts;
- a wall (5) with an orifice (6) through which the cartridge may be inserted, the said orifice (6) being positioned between the two ducts; **characterised in that**;
- a module fixed to this wall (5) opposite this orifice (6), defining a cartridge holder cavity and comprising a sealing cap that can move in a sliding movement along this cavity between a position covering the said cavity, corresponding to a position in which the diffusion of the perfume is interrupted, and a position where the said cavity is not covered, corresponding to a position where the perfume is diffused, wherein the said module is inserted between the said ducts with which it communicates via lateral openings in these ducts.

2. Ventilator of claim 1, **characterised in that** the two ducts comprise rapid assembly means, and **in that** these ducts as well as the module comprise mutually interlocking zones.

3. Ventilator of any of claims 1 or 2, **characterised in that** the cavity is advantageously equipped with elastic means (26) permitting, in an uncompressed position, to hold the cartridge in an extraction position, making the cartridge easier to reach by the user, and authorising, in a compression position, the cartridge to be moved into an installation position in the ventilator, wherein the cartridge and the cavity comprise stop means that may be freed, to hold the cartridge in this installation position.

4. Ventilator of any of claims 1 to 3, **characterised in that** the orifice (6) and the cavity have axes that are not perpendicular to the plane of the wall that this orifice (6) is located in, and **in that** the cartridge comprises a wall with an inclined end, fitted so that it is placed against, in the position where the cartridge is installed in the ventilator, the face of the said wall opposite that against which the module is placed.

5. Ventilator of any of claims 1 to 4, **characterised in that** the cap comprises a lip or sealing chicane permitting the seal of the cavity to be improved with respect to the air flow duct in the non diffusion of air position.

6. Ventilator of any of claims 1 to 5, **characterised in that** the control means of the sealing cap are fitted onto the said module.

7. Ventilator of claim 6, **characterised in that**:
- the sealing cap comprises a longitudinal gear rack protruding from its lateral wall;
- the module comprises a wheel equipped with a curved gear, meshing, directly or not, with the gear rack of the sealing cap, wherein this wheel is supported by at least one wall of the module;
- the ventilator comprises an opening permitting access to this wheel, especially fitted in the said wall comprising the said orifice.

8. Ventilator of any of claims 1 to 7, **characterised in that** it comprises one or more opening/closing flaps (50) of the air flow duct(s) (3), and a single control element to control the movement of the sealing cap and the movement of this or these flaps (50).

## Patentansprüche

1. - Lüfter, insbesondere für Kraftfahrzeuge, der zumindest ein Luftströmungsrohr, zumindest eine Düse zur Diffusion dieser Luft, eine Patrone zur Diffusion von Parfüm, und Steuermittel umfasst, die es ermöglichen, die Diffusion des Parfüms zu unterbrechen oder zu erlauben, **dadurch gekennzeichnet, dass** er folgendes umfasst:
- zwei parallele Luftströmungsrohre;
- eine Wand (5), die mit einer Öffnung (6) durchbohrt ist, durch die die Patrone eingeführt werden kann, wobei diese Öffnung (6) zwischen den beiden Rohren ausgespart ist; **dadurch gekennzeichnet, dass**
- ein Modul, das an dieser Wand (5) gegenüber dieser Öffnung (6) befestigt ist, einen Behälter für die Aufnahme der Patrone begrenzt und eine Verschlusskappe umfasst, die durch Verschiebung an diesem Behälter entlang zwischen einer Überdeckungsposition des Behälters, die einer Unterbrechungsposition der Diffusion des Parfüms entspricht, und einer Nichtüberdeckungsposition des Behälters, die einer Position der Diffusion des Parfüms entspricht, mobil ist, wobei das Modul zwischen den Rohren eingefügt ist, mit denen es durch seitliche Öffnungen verbunden ist, die in diesen Rohren ausgespart sind.

2. - Lüfter nach Anspruch 1, **dadurch gekennzeichnet, dass** die beiden Rohre Schnellverbindungsmittel umfassen, und dass diese Rohre sowie das Modul reziproke Steckzonen umfassen.

3. - Lüfter nach Anspruch 1 oder 2, **dadurch gekennzeichnet, dass** der Behälter mit elastischen Mitteln (26) ausgestattet ist, die es in einer Nichtkompressionsposition erlauben, die Patrone in einer Entnahmeposition zu halten, die das Ergreifen dieser Patrone durch den Benutzer erleichtert, und die in einer Kompressionsposition die Aufnahme der Patrone in der Installationsposition im Lüfter erlauben, wobei die Patrone und der Behälter freigebbare Haltemittel umfassen, um die Patrone in dieser Installationsposition zu halten.

4. - Lüfter nach einem der Ansprüche 1 bis 3, **dadurch gekennzeichnet, dass** die Öffnung (6) und der Behälter Achsen aufweisen, die nicht lotrecht zur Ebene der Wand sind, in der diese Öffnung (6) ausgespart ist, und **dadurch**, dass die die Patrone eine Wand mit geneigtem Ende umfasst, die derart angeordnet ist, dass sie in der Installationsposition der Patrone im Lüfter auf gleicher Höhe ist mit der Seite der Wand, die derjenigen gegenüberliegt, gegen die das Modul platziert ist.

5. - Lüfter nach einem der Ansprüche 1 bis 4, **dadurch gekennzeichnet, dass** die Kappe eine Dichtlippe oder -scheibe umfasst, die es erlaubt, die Dichtheit des Behälters gegenüber dem Luftströmungsrohr in der Position der Nichtdiffusion von Luft zu steigern.

6. - Lüfter nach einem der Ansprüche 1 bis 5, **dadurch gekennzeichnet, dass** die Steuermittel der Verschlusskappe auf diesem Modul montiert sind.

7. Lüfter nach Anspruch 6, **dadurch gekennzeichnet, dass**:
- die Verschlusskappe eine longitudinale Zahnstange umfasst, die aus ihrer Seitenwand herausragt;
- das Modul eine Rolle umfasst, die mit einer gebogenen Zahnstange ausgerüstet ist, die direkt oder nicht mit der Zahnstange der Verschlusskappe eingreift,
wobei diese Rolle von zumindest einer Wand getragen wird, die fest mit dem Modul verbunden ist;
- der Lüfter eine Öffnung umfasst, die den Zugang zu dieser Rolle erlaubt, die insbesondere in der Wand mit dieser Öffnung ausgespart ist.

8. - Lüfter nach einem der Ansprüche 1 bis 7, **dadurch gekennzeichnet, dass** er ein oder mehrere Klappen (50) zur Öffnung/Schließung von dem oder den Luftströmungsrohren (3) und ein Einknopfsteuerorgan zur Steuerung der Verschiebung der Verschlusskappe und der Verschiebung von dieser oder diesen Klappen (50) umfasst.
